# EUROPEAN PATENT SPECIFICATION

(11) **EP 3 358 649 B1**
(45) Date of publication and mention of the grant of the patent: **08.09.2021**
(21) Application number: 17154844.9
(22) Date of filing: 06.02.2017
(51) Int. Cl.: H01M 10/658, H01M 50/502

(54) **CURRENT COLLECTOR SYSTEM OF A BATTERY MODULE**
STROMABLEITERSYSTEM EINES BATTERIEMODULS
SYSTÈME COLLECTEUR DE COURANT D'UN MODULE DE BATTERIE

(43) Date of publication of application: 08.08.2018
(73) Proprietor: Samsung SDI Co., Ltd, Gyeonggi-do 17084 (KR)
(72) Inventor: Golubkov, Andrej, 8010 Graz (AT)
(74) Representative: Gulde & Partner

(56) References cited:
- DE-A1-102013 112 395
- US-A1- 2011 039 142
- US-A1- 2016 006 007
- US-A1- 2016 093 931
- US-B1- 9 147 875

## Description

### Field of the Invention

The present invention relates to a current collector system for a battery module and a battery module including the current collector system.

### Technological Background

Rechargeable or secondary batteries are widely used in various electronic appliances. Low-capacity rechargeable batteries are generally used as power supply for small electronic devices, such as cellular phones, notebook computers and camcorders, while high-capacity rechargeable batteries are used e.g. in automotive and aerospace industries.

Li-ion batteries are commonly used because they provide a high energy density, low self-discharge and long battery life. Beyond their employment in portable electronics, Li-ion batteries are also growing in popularity for battery electric vehicles.

When the electrical capacity of the individual cells is smaller than the desired capacity of the module, battery modules formed of a plurality of unit battery cells coupled in series and/or in parallel may be used to realize a high-power rechargeable battery, e.g. for driving a motor of a hybrid vehicle. The battery module is formed by interconnecting the electrode terminals of the plurality of unit battery cells, wherein the number of battery cells depends on a required amount of power. Automotive Li-ion battery systems typically consist of several modules connected together.

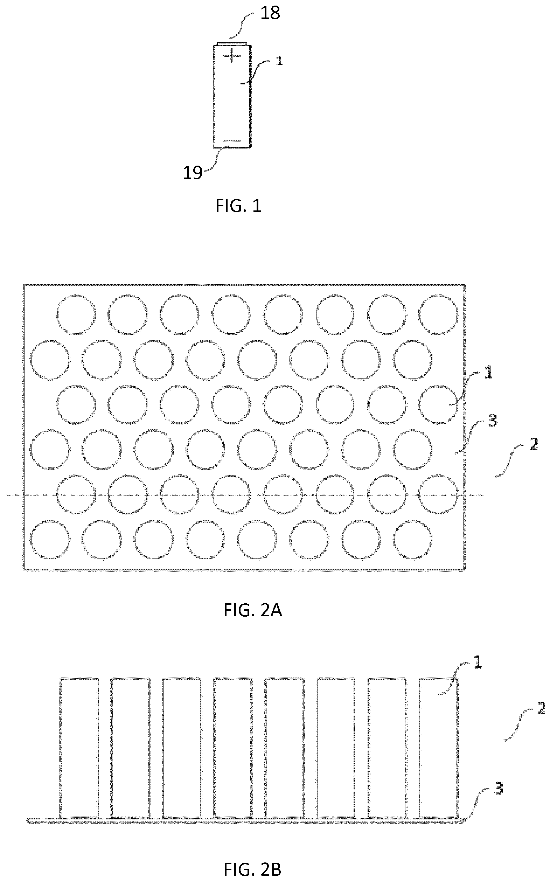

A conventional battery module with cylindrical cells is shown in Figs. 1 and 2A-2B, wherein Fig. 1 shows a cylindrical battery cell 1, comprising a positive terminal 18 and a negative terminal 19, and Fig. 2A and 2B respectively show a top view and a side cross sectional view of a battery module 2 comprising a plurality of cylindrical battery cells 1 and a negative current collector plate 3 connected to the negative terminals of the cylindrical cells 1 so that all battery cells are connected in parallel, thus achieving higher capacity. The positive terminals of all cells may also be connected in parallel to a positive current collector plate in a similar way (not shown).

For instance, DE 10 2013 112 395 A1 is directed to a battery module comprising a first current collector rail connecting the positive terminals of all battery cells and a second current collector rail connecting the negative terminals of all battery cells.

The electrically conductive negative and positive current collector plates are further connected to the electric interface of the module. The battery modules may be further connected in series, until the desired system voltage of the battery system is reached.

However, the use of many Li-ion batteries, which contain a pressurized flammable electrolyte, inside the module poses a serious safety risk for the battery. It is therefore a major issue for batteries manufacturers to provide a thermal control system to keep the temperature of the battery module below a safety threshold by efficiently emitting, discharging and/or dissipating heat generated from the rechargeable battery cells contained therein.

An increase of the internal temperature of one or more battery cells may occur due to a local failure, such as an internal short circuit of a cell, heating from a bad electrical contact, or a short circuit to a neighbouring cell. In this case, if the heat dissipation in the battery module is not sufficiently performed, a temperature increase may propagate to neighbouring battery cells and may lead to abnormal reactions occurring therein.

An example of such abnormal reaction condition is the thermal runaway of a battery cell that may be entered by strongly overheated or overcharged lithium ion cells. When the temperature inside a failed battery cell exceeds a critical value, which is typically about 150°C, a situation of positive feedback sets in, wherein the exothermic reactions inside the battery cells are accelerated due to the increased temperature and, in turn, release energy that further increases the cell temperature. During thermal runaway, the failed cell may heat up to cell temperatures higher than 900°C and may eject large quantities of hot gas into the battery system, until all available material is exhausted. Thus, large amounts of heat and gas can be emitted towards adjacent cells. Furthermore, a significant amount of heat may be dissipated through heat conduction paths such as the negative and/or the positive current collector plates.

The heat conduction paths between two adjacent cells in a battery module include heat conductivity through direct physical contact of the two cells and heat conductivity through the current collector plate. Additionally, heat may be also transferred through convection for a short time, as a consequence of the hot vent-gases released by the failed cell.

Because current collector plates usually have good thermal conductivity, a high amount of heat coming from the failed battery cell may be transported to the directly adjacent battery cells via the current collector plate. As a result, the temperature of the neighbouring battery cells rises exceedingly because of the combined effect of the hot gas emitted by the failed cell and the heat transported by the collector plates. As the neighbouring non-failed cells are heated above 150°C, they can transit into thermal runaway as well. The result is a propagation of the thermal runaway from cell to cell through the whole battery pack. Eventually, thermal runaway propagation may cause a battery fire and even the total loss of the vehicle.

It is thus an object of the present invention to overcome or reduce at least some of the drawbacks of the prior art and to provide a battery module wherein the thermal runaway propagation may be prevented by reducing heat transport to neighbouring cells via the collector plates and by distributing the heat of the failed cell among a larger amount of cells.

### Summary of Invention

One or more of the drawbacks of the prior art could be avoided or at least reduced by means of the present invention. In particular, it is an object of the present invention to provide a battery module capable of preventing propagation of the thermal runaway between neighbouring cells.

It is a further object of the present invention to provide a current collector system for a battery module which has a stacked structure with two or more current collector plates thermally insulated from each other, wherein each battery cell of the battery module is connected to only one of the connector plates.

It is a further object of the present invention to provide a battery module comprising a stacked current collector system for distributing the heat generated by a failed cell to battery cells which are not adjacent to the failed cell.

According to an aspect of the present invention, a current collector system is provided according to claim 1.

The current collector system comprises a layer of thermally insulating material between the first current collector plate and the second current collector plate.

The first current collector plate may be a uniform sheet of electrically conducting material. The second current collector plate may comprise a plurality of holes (perforations) corresponding to the first connection sites of the first current collector plate for exposing the first connection sites.

Alternatively, the first collector plate may comprise a plurality of perforations corresponding to connection sites except the first connection sites and the second current collector plate may comprise a plurality of perforations corresponding to connection sites except the second connection sites.

The current collector system may further comprise a third current collector plate stacked on the second current collector plate with a layer of thermally insulating material therebetween. The third current collector plate may comprise a plurality of holes corresponding to the first connection sites of the first current collector plate and to the second connection sites of the second current collector plate for exposing the first connection sites and the second connection sites.

Alternatively, the third current collector plate may comprise a plurality of perforations corresponding to connection sites except third connection sites, at which the third current collector plate is to be electrically connected to battery cells of a third group.

The current collector system may further comprise a fourth current collector plate stacked on the third current collector plate with a layer of thermally insulating material therebetween. Preferably, the fourth current collector plate comprises a plurality of perforations corresponding to connection sites except fourth connection sites, at which the fourth current collector plate is adapted to be electrically connected to battery cells of a fourth group.

Each of the current collector plates may comprise a sheet of Aluminium or copper alloy. Preferably, each of the current collector plates has a thickness ranging between 0.1mm and 2mm.

The layer of thermally insulated material may comprise a thermally stable composite - such as mica based or glass fiber based or silicone based - or an aerogel or a ceramic fiber mat. Preferably, the layer of thermally insulated material has a thickness ranging between 0.1mm and 5mm. Preferably, the current collector plates and the insulating layers are all glued together, to form one single stiff composite.

Preferably, at least two current collector plates are electrically connected to each other at a junction point. Preferably, the junction point is located adjacent to the high current interface of the module. In a preferred embodiment, all the current collector plates may be electrically connected to each other at the junction point. In this case all groups of battery cells are connected in parallel. Alternatively, the current collector plates may be electrically connected to each other in pairs at two or more spatially separated junction points. In this case the groups of battery cells are connected in series.

Preferably, the junction point is located at a distance d from the next cell, which is larger than a minimum distance S between two battery cells of the same group. Preferably, the junction point is located at a short extension of the collector plate. Preferably, the junction point is formed in a portion of the current collector plates where no insulation layer is provided between the current collector plates. Preferably, the plates are preformed (by e.g. stamping), so that they contact each other at the junction point. Good electrical contact between the current collector plates can be realized by welding, with a bolt or with a stud.

According to a further aspect of the invention, a battery module comprises a plurality of battery cells divided in at least a first group and a second group, each battery cell having a positive terminal and a negative terminal; and a current collector system comprising at least a first current collector plate and a second current collector plate thermally insulated from each other, wherein each battery cell of the first group is electrically connected to the first current collector plate at a corresponding first connection site and each battery cell of the second group is electrically connected to the second current collector plate at a corresponding second connection site, wherein the minimum distance between two battery cells connected to the same one of the first current collector plate and the second current collector plate is greater than a distance between two adjacent battery cells in the battery module.

Preferably, the battery module further comprises a second current collector system comprising at least a first current collector plate and a second current collector plate thermally insulated from each other, wherein one of the negative terminal and the positive terminal of each battery cell of the first group is electrically connected to the first current collector plate of the first current collector system at a corresponding first connection site and the other one of the negative terminal and the positive terminal of each battery cell of the first group is electrically connected to the first current collector plate of the second current collector system at a corresponding first connection site, and wherein one of the negative terminal and the positive terminal of each battery cell of the second group is electrically connected to the second current collector plate of the first current collector system at a corresponding second connection site and the other one of the negative terminal and the positive terminal of each battery cell of the second group is electrically connected to the second current collector plate of the second current collector system at a corresponding second connection site.

The battery cells in the battery module may be disposed in a hexagonal pattern or in an orthogonal pattern. The first group and the second group of battery cells may be connected in parallel or in series by means of one or more junctions.

According to a further aspect of the invention, a vehicle is provided, which includes a battery module comprising a plurality of battery cells divided in at least a first group and a second group and a current collector system comprising at least a first current collector plate and a second current collector plate thermally insulated from each other, wherein each battery cell of the first group is electrically connected to the first current collector plate at a corresponding first connection site and each battery cell of the second group is electrically connected to the second current collector plate at a corresponding second connection site, and wherein the minimum distance between two battery cells connected to the same one of the first current collector plate and the second current collector plate is greater than a distance between two adjacent battery cells in the battery module.

In a battery module according to the present invention adjacent battery cells are electrically connected to different current collector plates, which are thermally insulated from each other, so that the heat generated by a failed cell inside the battery module is distributed to a greater area as compared to conventional battery modules comprising a single current collector plate. Accordingly, a temperature of each battery cell can be maintained below the critical temperature and thermal runaway propagation can be prevented.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic perspective view of a conventional cylindrical battery cell;
Fig. 2A illustrates a top view of a conventional battery module and Fig. 2B illustrates a side cross sectional view taken along the dotted line of Fig. 2A;
Fig. 3A illustrates a top view of a battery module comprising a current collector system according to a first embodiment of the invention and Fig. 3B illustrates a side cross sectional view taken along the dotted line of Fig. 3A;
Fig. 4A-4C respectively illustrate a top view of a first current collector plate, a second current collector plate and a third current collector plate of the current collector system of Fig. 3A-3B;
Fig. 5A illustrates a top view of a battery module comprising a current collector system according to a second embodiment of the invention and Fig. 5B illustrates a side cross sectional view taken along the dotted line of Fig. 5A;
Fig. 6 illustrates a top view of a battery module comprising a current collector system according to a third embodiment of the invention;
Fig. 7A illustrates a side cross sectional view taken along the line A-A of Fig. 6;
Fig. 7B illustrates a side cross sectional view taken along the line B-B of Fig. 6.
Fig. 8A-8E respectively illustrate a top view of a first current collector plate, a first insulating layer, a second current collector plate, a second insulating layer and a third current collector plate according to the third embodiment of the invention;
Fig. 9A illustrates a top view of a battery module comprising a current collector system according to a fourth embodiment of the invention and Fig. 9B illustrates a side cross sectional view taken along the dotted line of Fig. 9A;
Fig. 10A-10D respectively illustrate a top view of a first current collector plate, a second current collector plate, a third current collector plate and a fourth current collector plate according to the fourth embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques, that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

### First embodiment

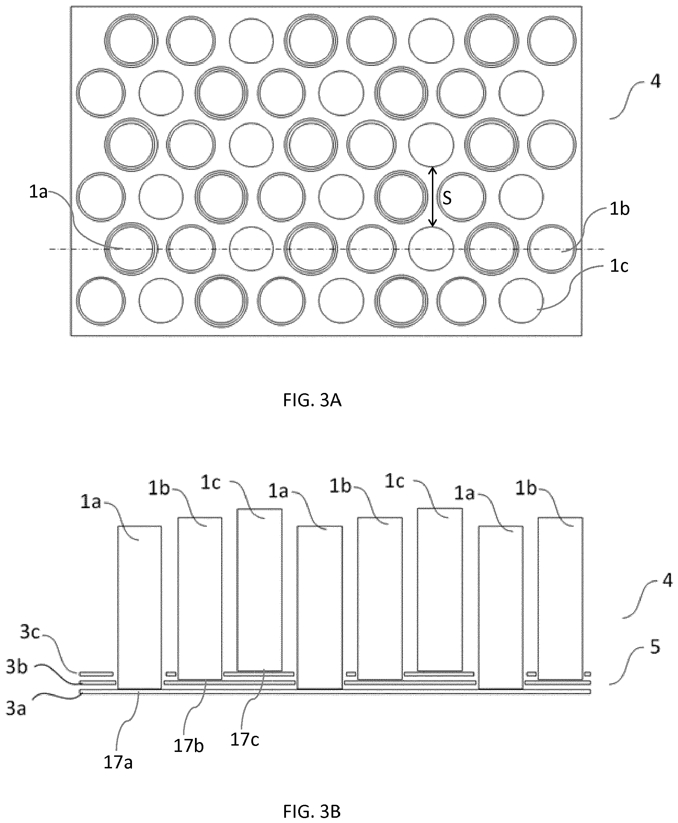

Figs. 3A-3B show a top view and a side cross sectional view of a battery module 4 with hexagonally arranged cells and a current collector system 5 according to a first embodiment of the present invention. The battery module 4 comprises a plurality of battery cells 1, like the one shown in Fig. 1. In general, a rechargeable battery cell comprises an electrode assembly including a positive electrode, a negative electrode, and a separator interposed between the positive and negative electrodes, a case receiving the electrode assembly, a positive terminal 18 electrically connected to the positive electrode and extending outside the case and a negative terminal 19 electrically connected to the negative electrode and extending outside the case. An electrolyte solution is injected into the case in order to enable charging and discharging of the battery via an electrochemical reaction of the positive electrode, the negative electrode, and the electrolyte solution.

The electrolyte solution may be made of a lithium salt, such as LiPF6 or LiBF4 with an organic solvent, such as EC, PC, DEC, EMC, or EMC. The electrolyte solution may be in a liquid, solid, or gel state. The case may be formed of a metal, such as Aluminium. Alternatively, a solid electrolyte may be provided, which consists of oxidic or sulfidic glass (Li₂O, Li₂S), glass ceramic (LAGP, LiPS) or ceramic (LLZO).

The case may have a cylindrical shape as shown in Fig. 1, but the shape of the case is not limited thereto and other shapes, e.g. rectangular shape, may be used as well depending on the battery's intended purpose. Further, a vent member, which may be configured to open due to a predetermined pressure inside the cell, may be provided.

According to the first exemplary embodiment, the battery cells are arranged in a battery module 4 with a hexagonal pattern. The battery cells inside the battery module 4 are divided into three groups 1a, 1b and 1c, in such a manner that the cells belonging to the same group are not adjacent to each other. According to the first embodiment, the current collector system 5 is a current collector plate stack comprising three individual current collector plates 3a, 3b and 3c.

The first current collector plate 3a comprises a plurality of first connection sites 17a corresponding to the locations where the battery cells of the first group 1a are electrically connected to the first current collector plate 3a. The second current collector plate 3b comprises a plurality of second connection sites 17b corresponding to the locations where the battery cells of the second group 1b are electrically connected to the second current collector plate 3b. The third current collector plate 3c comprises a plurality of third connection sites 17c corresponding to the locations where the battery cells of the third group 1c are electrically connected to the third current collector plate 3c.

The first current collector plate 3a is the outmost collector plate, which is facing away from the battery cells of the battery module 4. The second current collector plate 3b is located on the first current collector plate 3a and the third current collector plate 3c is located on the second current collector plate 3b. The third current collector plate 3c is the innermost current collector plate, which is facing towards the inside of the battery module 4, i.e. toward the battery cells 1a, 1 b and 1c. The first, second and third current collector plates 3a, 3b and 3c are thermally insulated from each other. To this end, a first thermal insulating layer (not shown) is provided between the first current collector plate 3a and the second current collector plate 3b and a second thermal insulating layer (not shown) may be provided between the second current collector plate 3b and the third current collector plate 3c.

The thermally insulating layers may be made of any suitable thermally insulating material, such as a thermally stable composite (mica based or glass fiber based or silicone based) or an aerogel or a ceramic fiber mat. According to an alternative embodiment which is not part of the present invention, an air gap may be formed between adjacent current collector plates for thermally insulating the current collector plates from each other.

In order to effectively prevent heat conduction from one current collector plate to the next, the thickness of the thermal insulating material is preferably more than 0.1mm but may preferably not exceed 5mm, so that the overall thickness of the current collector system and therefore the size of the battery module is not unduly increased.

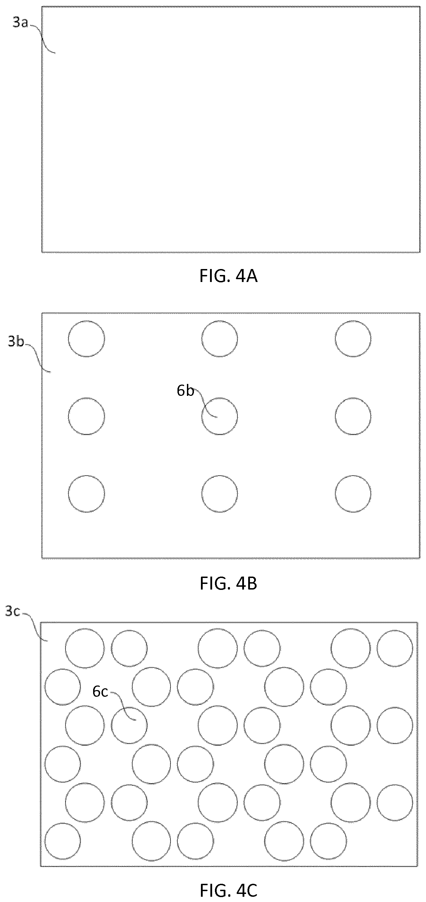

Fig. 4A shows a top view of the first current collector plate 3a, which builds the outermost plate of the current collector system 5 and consists of one layer of electrically conductive material. For instance, the first current collector plate 3a may be a sheet of copper or aluminium alloy. A protective coating - e.g. nickel - may be further applied on the first current collector plate 3a.

The first current collector plate 3a may be a uniform sheet without holes or perforations, while the second and third current collector plates 3b and 3c are provided with perforations 6b and 6c.

Fig. 4B shows a top view of the second current collector plate 3b, which comprises a plurality of perforations 6b corresponding to the first connection sites 17a on the first current collector plate 3a, wherein the battery cells of the first group 1a are connected to the first current collector plate 3a. Fig. 4C shows a top view of the third current collector plate 3c, which comprises a plurality of perforations 6c corresponding to the first connection sites 17a and to the second connection sites 17b. The size of the perforations 6b and 6c is large enough to insert the battery cells 1a, 1b therethrough, i.e. the size of the perforations 6b and 6c is larger than a cross sectional area of the battery cells. The first thermal insulating layer is provided with the same perforations 6b as the second current collector plate 3b and the second thermal insulating layer may be provided with the same perforations 6c as the third current collector plate 3c. However, according to an alternative embodiment which is not part of the present invention, thermal insulating layers having a perforation pattern different from that of the adjacent current collector plates may be provided.

The battery cells of the first group 1a are inserted in the perforations 6b and 6c of the second and third current collector plates 3b and 3c corresponding to the first connection sites 17a and are electrically connected to the first current collector plate 3a in the corresponding first connection sites 17a. For instance, the battery cells 1a may be fixed to the first connection sites 17a by means of welding or soldering or electrically conducting glue. The position of the first connection sites 17a is arranged in such a manner that a minimum distance S between two battery cells of the first group 1a is larger than the distance between two neighbouring battery cells in the battery module 4.

Analogously, the battery cells of the second group 1b are inserted in the perforations 6c of the third current collector plates 3c corresponding to the second connection sites 17b and are electrically connected to the second current collector plate 3b in the corresponding second connection sites 17b. Finally, the battery cells of the third group 1c are electrically connected to the third current collector plate 3c in the corresponding third connection sites 17c. Also for the second and third group 1b and 1c a minimum distance S between two battery cells of the same group is larger than the distance between two neighbouring battery cells in the battery module 4.

In the exemplary embodiment the negative terminals 19 of the cells in the first group 1a are electrically connected to the first current collector plate 3a. In a similar way, the negative terminals 19 of the cells in the second group 1b are electrically connected to the second current collector plate 3b and the negative terminals 19 of the cells in the third group 1c are electrically connected to the third current collector plate 3c. However, the present invention is not limited thereto and the positive terminals 18 may be alternatively connected to the current collector plates. Furthermore, a battery module may comprise two current collector systems, each connected either to the positive terminal or to the negative terminal, for connecting both the positive terminals 18 and the negative terminals 19 in parallel.

The first to third current collector plates 3a, 3b and 3c are thermally and electrically insulated from each other by means of the first and second thermal insulating layers. The first to third collector plates 3a, 3b and 3c can be electrically connected to each other at a junction point (not shown in the figures) located at an extension of the current collector plates 3a, 3b and 3c where no insulation layer is provided between the current collector plates 3a, 3b and 3c. Preferably, the plates are preformed (by e.g. stamping), so that they contact each other at the junction point. Good electrical contact between the current collector plates can be realized by welding, with a bolt or with a stud. Preferably the junction point is located near to the high current terminal of the module.

Accordingly, all battery cell groups 1a, 1b and 1c are electrically connected in parallel. For instance, the first to third current collector plates 3a, 3b and 3c may be electrically connected to the junction point, wherein the junction point is spaced apart from the current collector system 5. Alternatively, the current collector plates may be connected to each other via metal wires. The distance between the junction point and the current collector system 5 may be a least 50% of a minimum distance S between two battery cells of the same group. More preferably, a distance between the junction point and the next battery cell is larger than the minimum distance S between two battery cells of the same group.

Accordingly, even if a certain amount of heat may be transported from one current connector plate to the other via the electric junction point, still the amount of heat transported through a spatially separated electrical junction point is greatly reduced in comparison to the heat that may be transported between neighbouring battery cells through a single current collector plate of the prior art, like the one described in Fig. 2B.

In the present invention, each cell in the battery module 4 is electrically (and therefore also thermally) connected to only one of the current collector plates 3a, 3b and 3c, so that any two adjacent cells are not connected to the same current collector plate. Because any two adjacent cells are not directly electrically connected to each other, the heat conduction path through the current collector plate between the two neighbouring cells is minimized.

As a result, the heat generated by the failed cell is mainly distributed through the current collector plate connected to the failed cell to other battery cells belonging to the same group, while heat propagation between different current collector plates is suppressed or reduced, because the individual current collector plates 3a, 3b and 3c are thermally insulated from each other. Since the current collector plates connect cells that have a minimal distance S to each other, which is greater than the distance between two adjacent cells, if a cell goes into thermal runaway, the heat of the failed cell is distributed to cells located in greater area - i.e. at a distance equal or greater than S - as compared to a battery module of the prior art.

In the battery module according to the present invention, a part of the heat emitted by the failed cell is absorbed by the neighbouring cells, which are closest to the failed cell, and are in direct contact with the emitted heat and hot gas, but another part of the heat - which is transported via the current collector plate connected to the failed cell - is distributed to battery cells which are further away from the failed cell (at a distance ≥ S).

Accordingly, the overall heat exchange between two cells is reduced and the heat is distributed more evenly between the battery cells in the battery module, so that each non-failed cells consumes a small share of the heat generated by the failed cell. When said share is small enough, it is possible to keep the temperature of the other non-failed cells below 150°C at all times, so that propagation of the thermal runaway can be prevented. The risk of battery system fire is therefore greatly reduced and the battery system remains in a safe state.

Additionally, a cooling system may be further used to dissipate heat generated inside the battery module to the outside of the battery module.

### Second embodiment

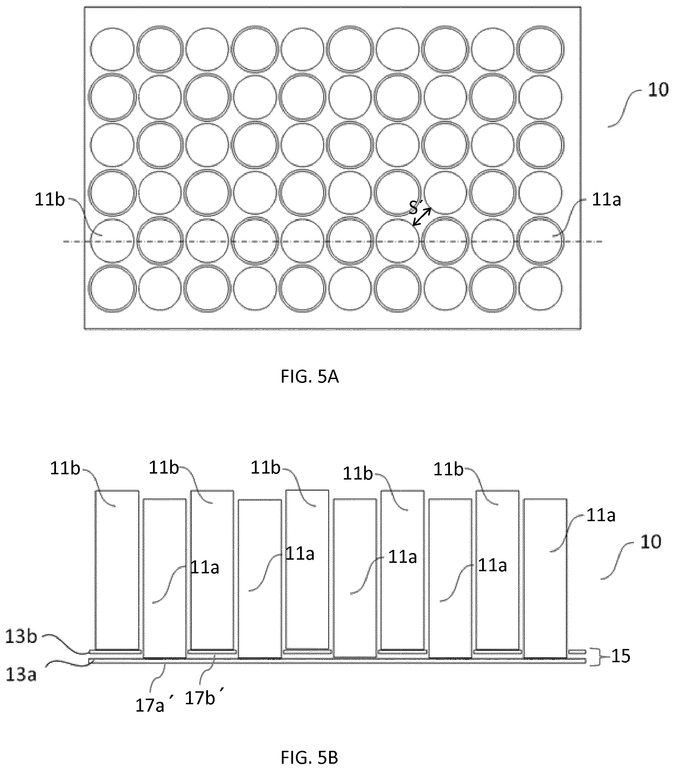

Another exemplary embodiment with cells arranged in an orthogonal arrangement is shown in figures 5A and 5B. Figs. 5A and 5B show a top view and a side cross sectional view of a battery module 10 comprising a current collector system 15 according to a second embodiment of the invention. In this exemplary embodiment the battery cells are divided into two cell groups 11a and 11b and the current collector system 15 is made up of two current collector plates 13a and 13b stacked on each other and thermally insulated from each other.

The first current collector plate 13a, which is the outermost plate, is formed as a uniform sheet without holes or perforations, while the second current collector plate 13b is provided with perforations.

The battery cells of the first group 11a are inserted in the perforations of the second current collector plate 13b and are electrically connected to the first current collector plate 13a in the corresponding first connection sites 17a'. The battery cells of the second group 11b are electrically connected to the second current collector plate 13b in the corresponding second connection sites 17b'. The first connection sites 17a' and the second connection sites 17b' are arranged in a checkboard pattern, so that a minimum distance S' between two battery cells of the same group is larger than the distance between two neighbouring battery cells in the battery module 10.

The second embodiment therefore differs from the first embodiment in the number of current collector plates and in the distributions of the perforations, while the characteristic of the single current collector plates and the thermal insulating layers are substantially the same as in the first embodiment described with reference to Figs. 3A-3B and Figs. 4A-4C and will be here therefore omitted.

Although in the embodiments described in Figs. 3B and 5B, the current collector system 5, 15 is connected to the negative terminals 19 of the battery cells in such a way that battery cells of different groups are separated, i.e. insulated, from each other, the present invention is not limited thereto, and the current collector system may be alternatively connected to the positive terminals 18 of the battery cells. Furthermore, a battery module may comprise two current collector systems like the one of Fig. 3B or Fig. 5B for connecting both the positive and the negative terminals in parallel, so that both the positive and the negative terminals of battery cells belonging to different groups can be separated.

Different electric configurations may also be used. For instance, positive and negative terminals of the battery cells may be alternatingly connected to the current collector plates.

### Third embodiment

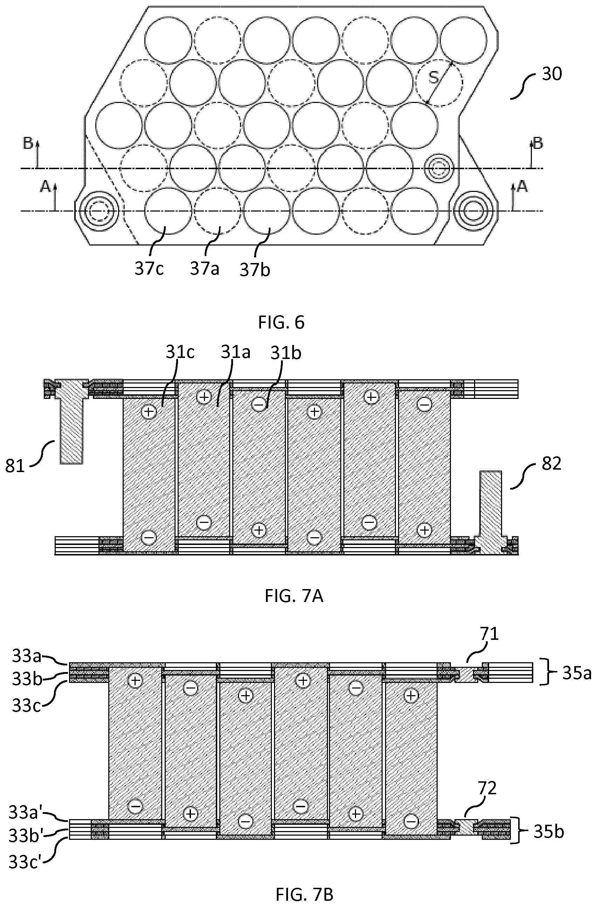

Another exemplary embodiment with cells arranged in a hexagonal arrangement is shown in figures 6 and 7A-7B. Fig. 6 shows a top view of a battery module 30 comprising a first current collector system 35a and a second current collector system 35b according to a third embodiment of the invention. Figs. 7A and 7B show a side cross sectional view taken along section AA and section BB, respectively, of Fig. 6. In this exemplary embodiment, each of the first and second current collector systems 35a and 35b comprises three current collector plates stacked on each other and thermally insulated from each other, wherein the first current collector systems 35a comprises first through third current collector plates 33a, 33b and 33c, and the second current collector system 35b comprises fourth to sixth current collector plates 33a', 33b', and 33c'. The battery cells are divided into three groups 31a, 31b and 31c, analogously to the first embodiment of Fig. 3B, so that a detailed description of the first, second and third groups of battery cells will be here omitted.

According to the third embodiment, the positive and negative terminals of the battery cells are alternatingly connected to the first and second current collector plates 35a and 35b. For instance, the positive terminals of battery cells in the first group 31a and the third group 31c are connected to the first current collector system 35a and the negative terminals of battery cells in the first group 31a and the third group 31c are connected to the second current collector system 35b, while the negative terminals of the battery cells in the second group 31b are connected to the first current collector system 35a and the positive terminals of the battery cells in the second group 31b are connected to the second current collector system 35b. However, the present invention is not limited thereto and different electric configurations may also be used.

In the present embodiment, therefore, the battery cells are not all connected to each other in parallel, instead only the battery cells of the same group are connected in parallel through the corresponding current collector plate, while the first to third groups of battery cells are connected in series. Accordingly, the first to third current collector plates 33a, 33b and 33c forming the first current collector system 35a are not connected to each other through a single junction point, instead a first junction point 71 is provided in the first current collector system 35a connecting the second current collector plate 33b to the third current collector plates 33c and a second junction point 72 is provided in the second current collector system 35b connecting the forth current collector plate 33a' to the fifth current collector plates 33b'.

The battery cells of the first group 31a are coupled between the first current collector plate 33a and the fourth current collector plate 33a', which is connected to the fifth current collector plate 33b' via the second junction 72. The battery cells of the second group 31b are coupled between the fifth current collector plate 33b' and the second current collector plate 33b, which is connected to the third current collector plate 33c via the first junction 71. The battery cells of the third group 31c are coupled between the third current collector plate 33c and the sixth current collector plate 33c'. Furthermore, a positive terminal tab 81 of the battery module 30 is connected to the first current collector plate 33a and a negative terminal tab 82 of the battery module 30 is connected to the sixth current collector plate 33c'. Accordingly, the three groups of battery cells 31a, 31b and 31c are connected in series between the positive and negative terminal tabs 81 and 82.

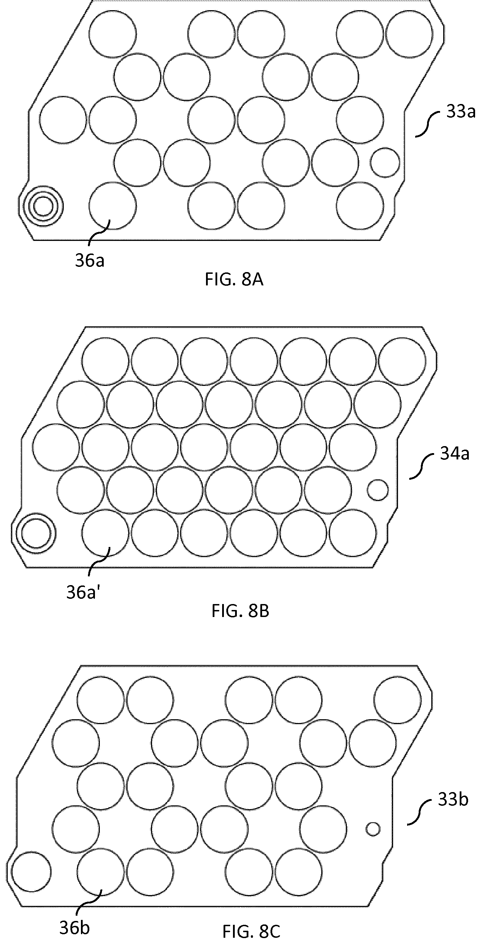

Figs. 8A through 8E respectively show a top view of the first current collector plate 33a, a first insulating layer 34a located between the first and second current collector plates 33a and 33b, a second current collector plate 33b, a second insulating layer 34b located between the second and third current collector plates 33b and 33c, and a third current collector plate 33c, which are stacked on each other in the mentioned order.

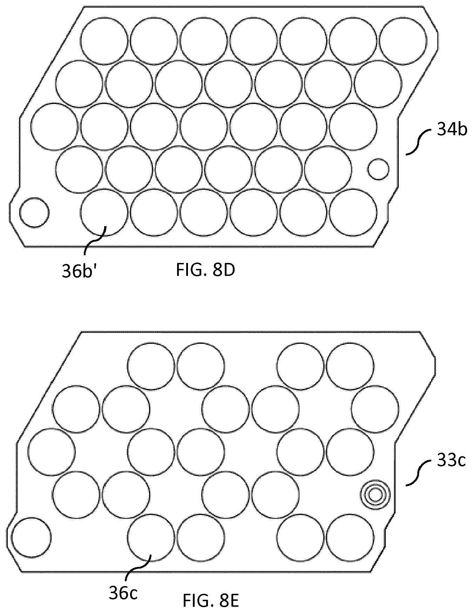

According to the present embodiment, the perforations in the first to third current collector plates 33a, 33b and 33c are different form the perforations shown in Figs. 4A to 4C. In particular, the first current collector plate 33a shown in Fig. 8A comprises a plurality of first perforations 36a corresponding to connection sites 37b, 37c except the first connection sites 37a on the first current collector plate 33a, where the battery cells of the first group 31a are connected to the first current collector plate 33a. Fig. 8C shows a top view of the second current collector plate 33b, which comprises a plurality of second perforations 36b corresponding to connection sites 37a, 37c except the second connection sites 37b on the second current collector plate 33b, where the battery cells of the second group 31b are connected to the second current collector plate 33b. Fig. 8E shows a top view of the third current collector plate 33c, which comprises a plurality of third perforations 36c corresponding to connection sites 37a, 37b except the third connection sites 37c on the third current collector plate 33c, where the battery cells of the third group 31c are connected to the third current collector plate 33c.

Figs. 8B and 8D respectively show a top view of the first insulating layer 34a and the second insulating layer 34b, wherein the first and second insulating layers 34a, 34b comprise first and second perforations 36a' and 36b' in correspondence to all connection sites 37a, 37b and 37c, so that only one current collector plate of the first current collector systems 35a is provided at each connection site and the first and second insulating layers 34a, 34b are provided between areas of the current collector plates different form the connection sites 37a, 37b and 37c. Further perforations may be provided in the first to third current collector plates 33a, 33b and 33c and in the first and second insulating layers 34a and 34b, corresponding to the location of the first junction point 71 and to the location of the positive terminal tab 81 of the module 30.

The fourth to sixth current collector plates 33a', 33b' and 33c' and the insulating layers therebetween may have a structure similar to that of the current collector plates in the first current collector system, wherein each of the fourth to sixth current collector plates 33a', 33b' and 33c' comprises a plurality of perforations expect in the areas corresponding to the respective connection sites, and the insulating layers comprise a plurality of perforations corresponding to all connection sites and to the locations of the second junction point 72 and of the negative terminal tab 82 of the module 30.

According to the third embodiment, since only one current collector plate for each of the first and second current collector systems 35a and 35b is provided at every connection site 37a, 37b and 37c, a contact area between adjacent current collector plates is minimized and heat dissipation to the outside of the battery module is increased. Accordingly, the safety of the battery module is improved.

Although the first and second embodiments are directed to current collector systems comprising three or two current collector plates, respectively, the present invention is not limited thereto and current collector systems comprising four or more plates may be provided as well. Accordingly, other arrangements beside the hexagonal and checkboard arrangements may be used without departing from the scope of the invention.

### Fourth embodiment

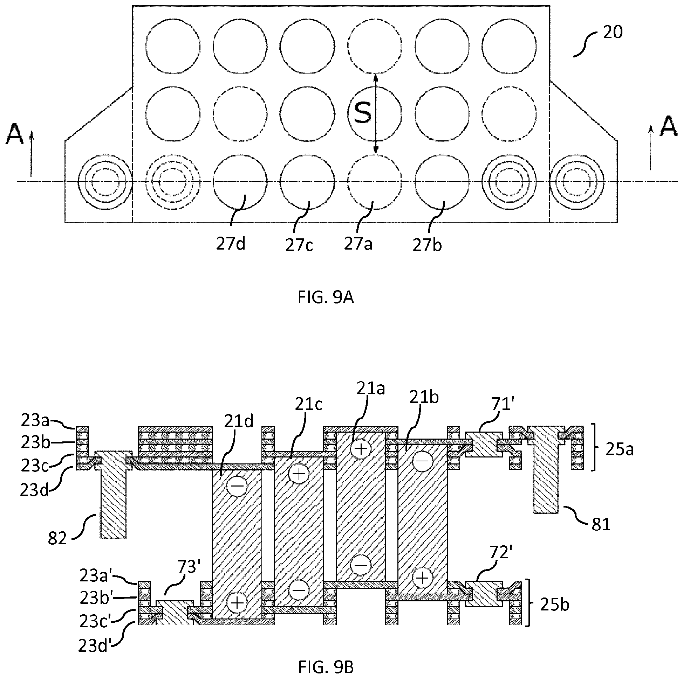

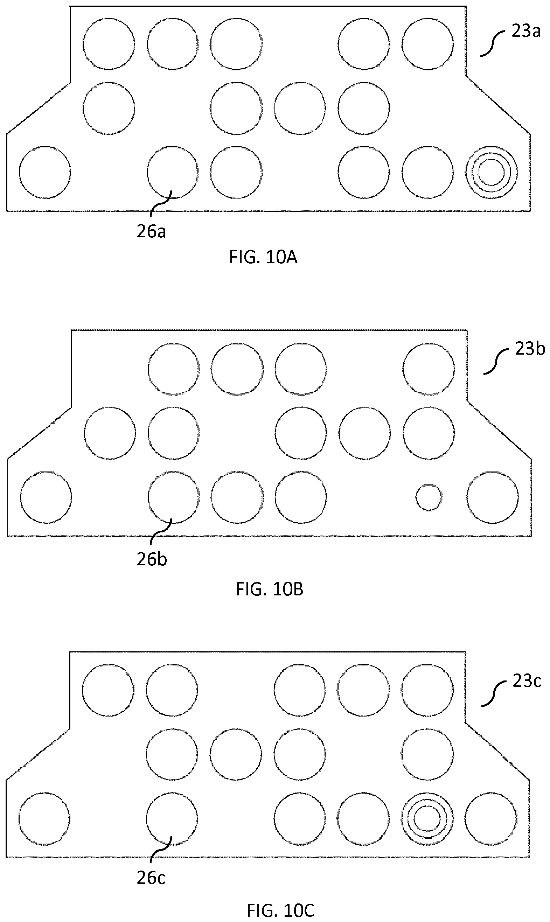

Another exemplary embodiment with cells arranged in an orthogonal arrangement and comprising four current collector plates is shown in figures 9A-9B and 10A through 10D. Figs. 9A and 9B show a top view and a side cross sectional view of a battery module 20 comprising a first (upper) current collector system 25a and a second (lower) current collector system 25b according to a fourth embodiment of the invention. In this exemplary embodiment the battery cells are divided into four cell groups 21 a, 21b, 21c and 21d and both the first and second collector systems 25a and 25b comprise four current collector plates stacked on each other and thermally insulated from each other. Figs. 10A through 10D show a top view of the first to fourth current collector plates 23a, 23b, 23c and 23d forming the first current collector system 25a.

Fig. 10A shows a top view of the first current collector plate 23a, which builds the outermost plate of the first current collector system 25a and consists of one layer of electrically conductive material comprising a plurality of first perforations 26a corresponding to connection sites 27b, 27c, 27d except the first connection sites 27a on the first current collector plate 23a, where the battery cells of the first group 21a are connected to the first current collector plate 23a. According to the embodiment shown in Fig. 9B, the positive terminal 18 of the battery cells of the first group 21a is connected to the first current collector plate 23a, but the present invention is not limited thereto.

Fig. 10B shows a top view of the second current collector plate 23b, which comprises a plurality of second perforations 26b corresponding to connection sites 27a, 27c, 27d except the second connection sites 27b on the second current collector plate 23b, where the battery cells of the second group 21b are connected to the second current collector plate 23b. According to the present embodiment, the negative terminal 19 of the battery cells of the second group 21b is connected to the second current collector plate 23b, but the present invention is not limited thereto.

Fig. 10C shows a top view of the third current collector plate 23c, which comprises a plurality of third perforations 26c corresponding to connection sites 27a, 27b, 27d except the third connection sites 27c on the third current collector plate 23c, where the battery cells of the third group 21c are connected to the third current collector plate 23c. According to the present embodiment, the positive terminal 18 of the battery cells of the third group 21c is connected to the third current collector plate 23c.

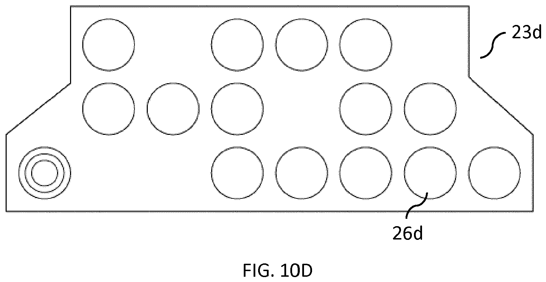

Finally, Fig. 10D shows a top view of the fourth current collector plate 23d, which comprises a plurality of fourth perforations 26d corresponding to connection sites 27a, 27b, 27c except the fourth connection sites 27d on the fourth current collector plate 23d, where the battery cells of the fourth group 21d are connected to the fourth current collector plate 23d. According to the present embodiment, the negative terminal 19 of the battery cells of the fourth group 21d is connected to the fourth current collector plate 23d.

Insulating layers may be provided between adjacent current collector plates, wherein the insulating layer may comprise perforations corresponding to the first to fourth connection sites 27a, 27d, 27c and 27d. The connection sites on each of the first to fourth current collector plates 23a, 23b, 23c and 23d are arranged in such a manner that a minimum distance S between two battery cells of the same group is larger than the distance between two neighbouring battery cells in the battery module 20.

According to the fourth embodiment, the first to fourth groups 21a, 21b, 21c and 21d of the battery cells are connected in series. In detail, a first junction point 71' is provided in the first current collector system 25a connecting the second current collector plate 23b to the third current collector plates 23c. A second and a third junction points 72' and 73' are provided in the second current collector system 25b, wherein the second junction point 72' electrically connects the first current collector plate 23a' of the second current collector system 25b to the second current collector plate 23b' of the second current collector system 25b and the third junction point 73' electrically connects the third current collector plate 23c' of the second current collector system 25b to the fourth current collector plate 23d' of the second current collector system 25b. Additionally, a positive terminal tab 81 of the module 20 is electrically connected to the first current collector plate 23a of the first current collector system 25a and a negative terminal tab 82 of the module 20 is electrically connected to the fourth current collector plate 23d of the first current collector system 25a.

The battery cells of the first group 21a are coupled between the first current collector plate 23a of the first current collector system 25a and the first current collector plate 23a' of the second current collector system 25b, which is connected to the second current collector plate 23b' of the second current collector system 25b via the second junction 72'. The battery cells of the second group 21b are coupled between the second current collector plate 23b' of the second current collector system 25b and the second current collector plate 23b of the first current collector system 25a, which is connected to the third current collector plate 23c of the first current collector system 25a via the first junction 71'. The battery cells of the third group 21c are coupled between the third current collector plate 23c of the first current collector system 25a and the third current collector plate 23c' of the second current collector system 25b, which is connected to the fourth current collector plate 23d' of the second current collector system 25b via the third junction 73'. The battery cells of the fourth group 21d are coupled between the fourth current collector plate 23d' of the second current collector system 25b and the fourth current collector plate 23d of the first current collector system 25a, which is connected to the negative terminal tab 82 of the battery module 30.

Furthermore, the positive terminal tab 81 of the battery module 30 is connected to the first current collector plate 23a of the first current collector system 25a. Accordingly, the four groups of battery cells 21a, 21b, 21c and 21d are connected in series between the positive and negative terminal tabs 81 and 82. However, the present invention is not limited thereto and groups of battery cells may be interconnected in different configurations.

According to a first example, a battery module may comprise 48 battery cells divided into three groups, with 16 cells in each group and the groups may be connected in a 3s16p configuration (16 cells in parallel - 3 cells in series).

According to a second example, a battery module may comprise 48 battery cells divided into four cell groups with 12 cells each. The battery module may further comprise four positive current collector plates and four negative current collector plates to connect the battery cells in a 4s12p configuration. However, the number of battery cells in a module is not limited to 48 and other configurations may be used. For instance, a 4sXp configuration (wherein X indicates the number of battery cells connected in parallel) may be ideally suited for 12V battery systems.

According to embodiments of the inventive concept, a current collector system having a stacked structure may prevent heat transport between neighbouring battery cells within a battery module thereby reducing temperature increase in the cells adjacent to a failed cell. Hence, propagation of thermal runaway to neighbouring cells may be prevented and the safety of the battery module increased.

While aspects of the present invention have been particularly shown and described with reference to exemplary embodiments thereof, it will be understood by those of ordinary skilled in the art that various changes may be made therein without departing from the scope of the present invention as defined by the following claims.

## Claims

1. A current collector system (5, 15, 25, 35) for a battery module (4, 10, 20, 30) comprising a plurality of battery cells (1), the current collector system (5, 15, 25a, 25b, 35a, 35b) comprising:
a first current collector plate (3a, 13a, 23a, 33a) and a second current collector plate (3b, 13b, 23b, 33b) stacked on each other and thermally insulated from each other;
wherein the first current collector plate (3a, 13a, 23a, 33a) comprises a plurality of first connection sites (17a, 17a', 27a, 37a) connectable to a first group (1a, 11a, 21a, 31a) of battery cells of the battery module (4, 10, 20, 30) and the second current collector plate (3b, 13b, 23b, 33b) comprises a plurality of second connection sites (17b, 17b', 27b, 37b) connectable to a second group (1b, 11b, 21b, 31b) of battery cells of the battery module (4, 10, 20, 30), and
**characterized in that**
the second current collector plate (3b, 13b) comprises a plurality of perforations (6b) corresponding to the first connection sites (17a, 17a') of the first current collector plate (3a, 13a) for exposing the first connection sites (17a, 17a'), wherein the second connection sites (17b, 17b', 27b, 37b) are away from the plurality of perforations (6b), and
a first thermal insulating layer made of thermally insulating material is provided between the first current collector plate (3a, 13a) and the second current collector plate (3b, 13b) the first thermal insulating layer being provided with the same perforations (6b) as the second current collector plate (3b)
wherein a minimum distance (S, S') between two first connection sites (17a, 17a', 27a, 37a) in the first current collector plate (3a, 13a, 23a, 33a) and between two second connection sites (17b, 17b', 27b, 37b) in the second current collector plate (3b, 13b,23b, 33b) is greater than the distance between two adjacent connection sites of the current collector system (5, 15, 25a, 25b, 35a, 35b).

2. The current collector system of claim 1, further comprising a layer of thermally insulating material (34a) between the first current collector plate (3a, 13a, 23a, 33a) and the second current collector plate (3b, 13b, 23b, 33b).

3. The current collector system of one of the preceding claims, wherein the second current collector plate (3b, 13b) comprises a plurality of perforations (6b) corresponding to the first connection sites (17a, 17a') of the first current collector plate (3a, 13a) for exposing the first connection sites (17a, 17a').

4. The current collector system of one of the preceding claims, further comprising a third current collector plate (3c) stacked on the second current collector plate (3b) with a layer of thermally insulating material therebetween.

5. The current collector system of claim 4, wherein the third current collector plate (3c) comprises a plurality of perforations (6c) corresponding to the first connection sites (17a) of the first current collector plate (3a) and to the second connection sites (17b) of the second current collector plate (3b) for exposing the first connection sites (17a) and the second connection sites (17b).

6. The current collector system of one of claims 1 and 2, wherein the first collector plate (23a, 33a) comprises a plurality of perforations (26a, 36a) corresponding to connection sites except the first connection sites (27a, 37a) and the second current collector plate (23b, 33b) comprises a plurality of perforations (26b, 36b) corresponding to connection sites except the second connection sites (27b, 37b).

7. The current collector system of claim 6, further comprising a third current collector plate (23c, 33c) stacked on the second current collector plate (23b, 33b) with a layer of thermally insulating material (34b) therebetween, wherein the third current collector plate (23c, 33c) comprises a plurality of perforations (26c, 36c) corresponding to connection sites except third connection sites (27c, 37c), wherein the third current collector plate (23c, 33c) is adapted to be electrically connected to battery cells of a third group (21c, 31c) at corresponding third connection sites (27c, 37c).

8. The current collector system of claim 7, further comprising a fourth current collector plate (23d) stacked on the third current collector plate (23c) with a layer of thermally insulating material therebetween, wherein the fourth current collector plate (23d) comprises a plurality of perforations (26d) corresponding to connection sites except fourth connection sites (27d), wherein the fourth current collector plate (23d) is adapted to be electrically connected to battery cells of a fourth group (21d) at corresponding fourth connection sites (27d).

9. The current collector system of one of the preceding claims, wherein each of the current collector plates (3a, 3b, 3c, 13a, 13b, 23a, 23b, 23c, 23d, 33a, 33b, 33c) comprises a sheet of electrically conducting metal alloy.

10. The current collector system of one of the preceding claims, wherein the layer of thermally insulating material comprises an air gap or a thermally stable composite.

11. The current collector system of one of the preceding claims, wherein at least two current collector plates (3a, 3b, 3c, 13a, 13b, 23a, 23b, 23c, 23d, 33a, 33b, 33c) are electrically connected to each other at a junction point (71, 72, 71',72', 73') located at an extension of the current collector system (5, 15, 25a, 25b, 35a, 35b).

12. A battery module (4, 10, 20, 30) comprising:
a plurality of battery cells (1) divided in at least a first group (1a, 11a, 21a, 31a) and a second group (1b, 11b, 21b, 31b), each battery cell (1) having a positive terminal (18) and a negative terminal (19); and
a current collector system (5, 15, 25a, 35a) according to one of claims 1 through 11;
wherein each battery cell of the first group (1a, 11a, 21a, 31a) is electrically connected to the first current collector plate (3a, 13a, 23a, 33a) at a corresponding first connection site (17a, 17a', 27a, 37a) and each battery cell of the second group (1b, 11b, 21b, 31b) is electrically connected to the second current collector plate (3b, 13b, 23b, 33b) at a corresponding second connection site (17b, 17b', 27b, 37b),
wherein the minimum distance (S, S') between two battery cells connected to the same one of the first current collector plate (3a, 13a, 23a, 33a) and the second current collector plate (3b, 13b, 23b, 33b) is greater than the distance between two adjacent battery cells in the battery module (4, 10, 20, 30).

13. The battery module of claim 12, further comprising:
a second current collector system (25b, 35b) according to one of claims 1 through 11;
wherein one of the negative terminal (19) and the positive terminal (18) of each battery cell of the first group (21a, 31a) is electrically connected to the first current collector plate (23a, 33a) of the first current collector system (25a, 35a) at a corresponding first connection site (27a, 37a) and the other one of the negative terminal (19) and the positive terminal (18) of each battery cell of the first group (21a, 31a) is electrically connected to the first current collector plate (23a', 33a') of the second current collector system (25b, 35b) at a corresponding first connection site (27a', 37a'); and
wherein one of the negative terminal (19) and the positive terminal (18) of each battery cell of the second group (21b, 31b) is electrically connected to the second current collector plate (23b, 33b) of the first current collector system (25a, 35a) at a corresponding second connection site (27b, 37b) and the other one of the negative terminal (19) and the positive terminal (18) of each battery cell of the second group (21b, 31b) is electrically connected to the second current collector plate (23b', 33b') of the second current collector system (25b, 35b) at a corresponding second connection site (27b', 37b').

14. The battery module of claim 13, wherein the first group (1a, 11a, 21a, 31a) and the second group (1b, 11b, 21b, 31b) of battery cells are connected in parallel or in series.

15. A vehicle including a battery module (4, 10, 20, 30) according to one of claims 12 through 14.

## Patentansprüche

1. Ein Stromableitersystem (5, 15, 25, 35) für ein Batteriemodul (4, 10, 20, 30), aufweisend eine Vielzahl von Batteriezellen (1), wobei das Stromableitersystem (5, 15, 25a, 25b, 35a, 35b) Folgendes aufweist:
eine erste Stromableiterplatte (3a, 13a, 23a, 33a) und eine zweite Stromableiterplatte (3b, 13b, 23b, 33b), die aufeinander gestapelt und thermisch voneinander isoliert sind;
wobei die erste Stromableiterplatte (3a, 13a, 23a, 33a) eine Vielzahl erster Verbindungsstellen (17a, 17a', 27a, 37a), die mit einer ersten Gruppe (1a, 11a, 21a, 31a) von Batteriezellen des Batteriemoduls (4, 10, 20, 30) verbindbar sind, aufweist und die zweite Stromableiterplatte (3b, 13b, 23b, 33b) eine Vielzahl zweiter Verbindungsstellen (17b, 17b', 27b, 37b), die mit einer zweiten Gruppe (1b, 11b, 21b, 31b) von Batteriezellen des Batteriemoduls (4, 10, 20, 30) verbindbar sind, aufweist und
**dadurch gekennzeichnet, dass**
die zweite Stromableiterplatte (3b, 13b) eine Vielzahl von Perforationen (6b) aufweist, die den ersten Verbindungsstellen (17a, 17a') der ersten Stromableiterplatte (3a, 13a) entsprechen, um die ersten Verbindungsstellen (17a, 17a') freizulegen, wobei die zweiten Verbindungsstellen (17b, 17b', 27b, 37b) von der Vielzahl der Perforationen (6b) entfernt sind, und
eine erste thermische Isolierschicht aus thermisch isolierendem Material zwischen der ersten Stromableiterplatte (3a, 13a) und der zweiten Stromableiterplatte (3b, 13b) vorgesehen ist, wobei die erste thermische Isolierschicht mit den gleichen Perforationen (6b) wie die zweite Stromableiterplatte (3b) vorgesehen ist,
wobei ein Mindestabstand (S, S') zwischen zwei ersten Verbindungsstellen (17a, 17a', 27a, 37a) in der ersten Stromableiterplatte (3a, 13a, 23a, 33a) und zwischen zwei zweiten Verbindungsstellen (17b, 17b', 27b, 37b) in der zweiten Stromableiterplatte (3b, 13b, 23b, 33b) größer ist als der Abstand zwischen zwei benachbarten Verbindungsstellen des Stromableitersystems (5, 15, 25a, 25b, 35a, 35b).

2. Das Stromableitersystem nach Anspruch 1, ferner aufweisend eine Schicht aus thermisch isolierendem Material (34a) zwischen der ersten Stromableiterplatte (3a, 13a, 23a, 33a) und der zweiten Stromableiterplatte (3b, 13b, 23b, 33b).

3. Das Stromableitersystem nach einem der vorhergehenden Ansprüche, wobei die zweite Stromableiterplatte (3b, 13b) eine Vielzahl von Perforationen (6b) aufweist, die den ersten Verbindungsstellen (17a, 17a') der ersten Stromableiterplatte (3a, 13a) entsprechen, um die ersten Verbindungsstellen (17a, 17a') freizulegen.

4. Das Stromableitersystem nach einem der vorhergehenden Ansprüche, ferner aufweisend eine dritte Stromableiterplatte (3c), die auf der zweiten Stromableiterplatte (3b) gestapelt ist, wobei eine Schicht aus thermisch isolierendem Material dazwischen liegt.

5. Das Stromableitersystem nach Anspruch 4, wobei die dritte Stromableiterplatte (3c) eine Vielzahl von Perforationen (6c) aufweist, die den ersten Verbindungsstellen (17a) der ersten Stromableiterplatte (3a) und den zweiten Verbindungsstellen (17b) der zweiten Stromableiterplatte (3b) entsprechen, um die ersten Verbindungsstellen (17a) und die zweiten Verbindungsstellen (17b) freizulegen.

6. Das Stromableitersystem nach einem der Ansprüche 1 und 2, wobei die erste Ableiterplatte (23a, 33a) eine Vielzahl von Perforationen (26a, 36a) aufweist, die Verbindungsstellen außer den ersten Verbindungsstellen (27a, 37a) entsprechen, und die zweite Stromableiterplatte (23b, 33b) eine Vielzahl von Perforationen (26b, 36b) aufweist, die Verbindungsstellen außer den zweiten Verbindungsstellen (27b, 37b) entsprechen.

7. Das Stromableitersystem nach Anspruch 6, ferner aufweisend eine dritte Stromableiterplatte (23c, 33c), die auf der zweiten Stromableiterplatte (23b, 33b) gestapelt ist, wobei eine Schicht aus thermisch isolierendem Material (34b) dazwischen liegt, wobei die dritte Stromableiterplatte (23c, 33c) eine Vielzahl von Perforationen (26c, 36c) aufweist, die Verbindungsstellen außer dritten Verbindungsstellen (27c, 37c) entsprechen, wobei die dritte Stromableiterplatte (23c, 33c) angepasst ist, um an entsprechenden dritten Verbindungsstellen (27c, 37c) mit Batteriezellen einer dritten Gruppe (21c, 31c) elektrisch verbunden zu werden.

8. Das Stromableitersystem nach Anspruch 7, ferner aufweisend eine vierte Stromableiterplatte (23d), die auf der dritten Stromableiterplatte (23c) gestapelt ist, wobei eine Schicht aus thermisch isolierendem Material dazwischen liegt, wobei die vierte Stromableiterplatte (23d) eine Vielzahl von Perforationen (26d) aufweist, die Verbindungsstellen außer vierten Verbindungsstellen (27d) entsprechen, wobei die vierte Stromableiterplatte (23d) angepasst ist, um an entsprechenden vierten Verbindungsstellen (27d) mit Batteriezellen einer vierten Gruppe (21d) elektrisch verbunden zu werden.

9. Das Stromableitersystem nach einem der vorhergehenden Ansprüche, wobei jede der Stromableiterplatten (3a, 3b, 3c, 13a, 13b, 23a, 23b, 23c, 23d, 33a, 33b, 33c) eine Platte einer elektrisch leitenden Metalllegierung aufweist.

10. Das Stromableitersystem nach einem der vorhergehenden Ansprüche, wobei die Schicht aus thermisch isolierendem Material einen Luftspalt oder einen thermisch stabilen Verbundwerkstoff aufweist.

11. Das Stromableitersystem nach einem der vorhergehenden Ansprüche, wobei zumindest zwei Stromableiterplatten (3a, 3b, 3c, 13a, 13b, 23a, 23b, 23c, 23d, 33a, 33b, 33c) an einem Verbindungspunkt (71, 72, 71', 72', 73'), der an einer Erweiterung des Stromableitersystems (5, 15, 25a, 25b, 35a, 35b) angeordnet ist, miteinander elektrisch verbunden sind.

12. Ein Batteriemodul (4, 10, 20, 30), aufweisend:
eine Vielzahl von Batteriezellen (1), die in zumindest eine erste Gruppe (1a, 11a, 21a, 31a) und eine zweite Gruppe (1b, 11b, 21b, 31b) unterteilt sind, wobei jede Batteriezelle (1) einen positiven Anschluss (18) und einen negativen Anschluss (19) aufweist; und
ein Stromableitersystem (5, 15, 25a, 35a) nach einem der Ansprüche 1 bis 11;
wobei jede Batteriezelle der ersten Gruppe (1a, 11a, 21a, 31a) an einer entsprechenden ersten Verbindungsstelle (17a, 17a', 27a, 37a) mit der ersten Stromableiterplatte (3a, 13a, 23a, 33a) elektrisch verbunden ist und jede Batteriezelle der zweiten Gruppe (1b, 11b, 21b, 31b) an einer entsprechenden zweiten Verbindungsstelle (17b, 17b', 27b, 37b) mit der zweiten Stromableiterplatte (3b, 13b, 23b, 33b) elektrisch verbunden ist,
wobei der Mindestabstand (S, S') zwischen zwei Batteriezellen, die mit derselben der ersten Stromableiterplatte (3a, 13a, 23a, 33a) und der zweiten Stromableiterplatte (3b, 13b, 23b, 33b) verbunden sind, größer ist als der Abstand zwischen zwei benachbarten Batteriezellen im Batteriemodul (4, 10, 20, 30).

13. Das Batteriemodul nach Anspruch 12, ferner aufweisend:
ein zweites Stromableitersystem (25b, 35b) nach einem der Ansprüche 1 bis 11;
wobei einer des negativen Anschlusses (19) und des positiven Anschlusses (18) jeder Batteriezelle der ersten Gruppe (21a, 31a) an einer entsprechenden ersten Verbindungsstelle (27a, 37a) mit der ersten Stromableiterplatte (23a, 33a) des ersten Stromableitersystems (25a, 35a) elektrisch verbunden ist und der andere des negativen Anschlusses (19) und des positiven Anschlusses (18) jeder Batteriezelle der ersten Gruppe (21a, 31a) an einer entsprechenden ersten Verbindungsstelle (27a', 37a') mit der ersten Stromableiterplatte (23a', 33a') des zweiten Stromableitersystems (25b, 35b) elektrisch verbunden ist; und
wobei einer des negativen Anschlusses (19) und des positiven Anschlusses (18) jeder Batteriezelle der zweiten Gruppe (21b, 31b) an einer entsprechenden zweiten Verbindungsstelle (27b, 37b) mit der zweiten Stromableiterplatte (23b, 33b) des ersten Stromableitersystems (25a, 35a) elektrisch verbunden ist und der andere des negativen Anschlusses (19) und des positiven Anschlusses (18) jeder Batteriezelle der zweiten Gruppe (21b, 31b) an einer entsprechenden zweiten Verbindungsstelle (27b', 37b') mit der zweiten Stromableiterplatte (23b', 33b') des zweiten Stromableitersystems (25b, 35b) elektrisch verbunden ist.

14. Das Batteriemodul nach Anspruch 13, wobei die erste Gruppe (1a, 11a, 21a, 31a) und die zweite Gruppe (1b, 11b, 21b, 31b) von Batteriezellen parallel oder in Reihe geschaltet sind.

15. Ein Fahrzeug, aufweisend ein Batteriemodul (4, 10, 20, 30) nach einem der Ansprüche 12 bis 14.

## Revendications

1. Système collecteur de courant (5, 15, 25, 35) pour un module de batterie (4, 10, 20, 30) comprenant une pluralité d'éléments de batterie (1), le système collecteur de courant (5, 15, 25a, 25b, 35a, 35b) comprenant :
une première plaque collectrice de courant (3a, 13a, 23a, 33a) et une deuxième plaque collectrice de courant (3b, 13b, 23b, 33b) empilées l'une sur l'autre et thermiquement isolées l'une de l'autre ;
dans lequel la première plaque collectrice de courant (3a, 13a, 23a, 33a) comprend une pluralité de premiers sites de connexion (17a, 17a', 27a, 37a) aptes à être connectés à un premier groupe (1a, 11a, 21a, 31a) d'éléments de batterie du module de batterie (4, 10, 20, 30) et la deuxième plaque collectrice de courant (3b, 13b, 23b, 33b) comprend une pluralité de deuxièmes sites de connexion (17b, 17b', 27b, 37b) aptes à être connectés à un deuxième groupe (1b, 11b, 21b, 31b) d'éléments de batterie du module de batterie (4, 10, 20, 30), et
**caractérisé en ce que**
la deuxième plaque collectrice de courant (3b, 13b) comprend une pluralité de perforations (6b) correspondant aux premiers sites de connexion (17a, 17a') de la première plaque collectrice de courant (3a, 13a) pour l'exposition des premiers sites de connexion (17a, 17a'), où les deuxièmes sites de connexion (17b, 17b', 27b, 37b) sont éloignés de la pluralité de perforations (6b), et
une première couche d'isolation thermique constituée de matériau thermiquement isolant est ménagée entre la première plaque collectrice de courant (3a, 13a) et la deuxième plaque collectrice de courant (3b, 13b), la première couche d'isolation thermique étant munie des mêmes perforations (6b) que la deuxième plaque collectrice de courant (3b),
dans lequel une distance minimale (S, S') entre deux premiers sites de connexion (17a, 17a', 27a, 37a) dans la première plaque collectrice de courant (3a, 13a, 23a, 33a) et entre deux deuxièmes sites de connexion (17b, 17b', 27b, 37b) dans la deuxième plaque collectrice de courant (3b, 13b, 23b, 33b) est supérieure à la distance entre deux sites de connexion adjacents du système collecteur de courant (5, 15, 25a, 25b, 35a, 35b).

2. Système collecteur de courant selon la revendication 1, comprenant en outre une couche de matériau thermiquement isolant (34a) entre la première plaque collectrice de courant (3a, 13a, 23a, 33a) et la deuxième plaque collectrice de courant (3b, 13b, 23b, 33b).

3. Système collecteur de courant selon l'une des revendications précédentes, dans lequel la deuxième plaque collectrice de courant (3b, 13b) comprend une pluralité de perforations (6b) correspondant aux premiers sites de connexion (17a, 17a') de la première plaque collectrice de courant (3a, 13a) pour l'exposition des premiers sites de connexion (17a, 17a').

4. Système collecteur de courant selon l'une des revendications précédentes, comprenant en outre une troisième plaque collectrice de courant (3c) empilée sur la deuxième plaque collectrice de courant (3b) avec une couche de matériau thermiquement isolant entre elles.

5. Système collecteur de courant selon la revendication 4, dans lequel la troisième plaque collectrice de courant (3c) comprend une pluralité de perforations (6c) correspondant aux premiers sites de connexion (17a) de la première plaque collectrice de courant (3a) et aux deuxièmes sites de connexion (17b) de la deuxième plaque collectrice de courant (3b) pour l'exposition des premiers sites de connexion (17a) et des deuxièmes sites de connexion (17b).

6. Système collecteur de courant selon l'une des revendications 1 et 2, dans lequel la première plaque collectrice (23a, 33a) comprend une pluralité de perforations (26a, 36a) correspondant à des sites de connexion à l'exception des premiers sites de connexion (27a, 37a) et la deuxième plaque collectrice de courant (23b, 33b) comprend une pluralité de perforations (26b, 36b) correspondant à des sites de connexion à l'exception des deuxièmes sites de connexion (27b, 37b).

7. Système collecteur de courant selon la revendication 6, comprenant en outre une troisième plaque collectrice de courant (23c, 33c) empilée sur la deuxième plaque collectrice de courant (23b, 23b) avec une couche de matériau thermiquement isolant (34b) entre elles, dans lequel la troisième plaque collectrice de courant (23c, 33c) comprend une pluralité de perforations (26c, 36c) correspondant à des sites de connexion à l'exception de troisièmes sites de connexion (27c, 37c), dans lequel la troisième plaque collectrice de courant (23c, 33c) est conçue pour être électriquement connectée à des éléments de batterie d'un troisième groupe (21c, 31c) au niveau de troisièmes sites de connexion (27c, 37c) correspondants.

8. Système collecteur de courant selon la revendication 7, comprenant en outre une quatrième plaque collectrice de courant (23d) empilée sur la troisième plaque collectrice de courant (23c) avec une couche de matériau thermiquement isolant entre elles, dans lequel la quatrième plaque collectrice de courant (23d) comprend une pluralité de perforations (26d) correspondant à des sites de connexion à l'exception de quatrièmes sites de connexion (27d), dans lequel la quatrième plaque collectrice de courant (23d) est conçue pour être électriquement connectée à des éléments de batterie d'un quatrième groupe (21d) au niveau de quatrièmes sites de connexion (27d) correspondants.

9. Système collecteur de courant selon l'une des revendications précédentes, dans lequel chacune des plaques collectrices de courant (3a, 3b, 3c, 13a, 13b, 23a, 23b, 23c, 23d, 33a, 33b, 33c) comprend une feuille d'alliage métallique électriquement conducteur.

10. Système collecteur de courant selon l'une des revendications précédentes, dans lequel la couche de matériau thermiquement isolant comprend une lame d'air ou un composite thermiquement stable.

11. Système collecteur de courant selon l'une des revendications précédentes, dans lequel au moins deux plaques collectrices de courant (3a, 3b, 3c, 13a, 13b, 23a, 23b, 23c, 23d, 33a, 33b, 33c) sont électriquement connectées l'une à l'autre au niveau d'un point de jonction (71, 72, 71', 72', 73') situé au niveau d'une extension du système collecteur de courant (5, 15, 25a, 25b, 35a, 35b).

12. Module de batterie (4, 10, 20, 30) comprenant :
une pluralité d'éléments de batterie (1) divisée en au moins un premier groupe (la, 11a, 21a, 31a) et un deuxième groupe (1b, 11b, 21b, 31b), chaque élément de batterie (1) ayant une borne positive (18) et une borne négative (19) ; et
un système collecteur de courant (5, 15, 25a, 35a) selon l'une des revendications 1 à 11 ;
dans lequel chaque élément de batterie du premier groupe (la, 11a, 21a, 31a) est électriquement connecté à la première plaque collectrice de courant (3a, 13a, 23a, 33a) au niveau d'un premier site de connexion (17a, 17a', 27a, 37a) correspondant et chaque élément de batterie du deuxième groupe (1b, 11b, 21b, 31b) est électriquement connecté à la deuxième plaque collectrice de courant (3b, 13b, 23b, 33b) au niveau d'un deuxième site de connexion (17b, 17b', 27b, 37b) correspondant,
dans lequel la distance minimale (S, S') entre deux éléments de batterie connectés à la même plaque parmi la première plaque collectrice de courant (3a, 13a, 23a, 33a) et la deuxième plaque collectrice de courant (3b, 13b, 23b, 33b) est supérieure à la distance entre deux éléments de batterie adjacents dans le module de batterie (4, 10, 20, 30) .

13. Module de batterie selon la revendication 12, comprenant en outre :
un second système collecteur de courant (25b, 35b) selon l'une des revendications 1 à 11 ;
dans l'une parmi la borne négative (19) et la borne positive (18) de chaque élément de batterie du premier groupe (21a, 31a) est électriquement connectée à la première plaque collectrice de courant (23a, 33a) du premier système collecteur de courant (25a, 35a) au niveau d'un premier site de connexion (27a, 37a) correspondant et l'autre parmi la borne négative (19) et la borne positive (18) de chaque élément de batterie du premier groupe (21a, 31a) est électriquement connectée à la première plaque collectrice de courant (23a', 33a') du second système collecteur de courant (25b, 35b) au niveau d'un premier site de connexion (27a', 37a') correspondant ; et
dans lequel l'une parmi la borne négative (19) et la borne positive (18) de chaque élément de batterie du deuxième groupe (21b, 31b) est électriquement connectée à la deuxième plaque collectrice de courant (23b, 33b) du premier système collecteur de courant (25a, 35a) au niveau d'un deuxième site de connexion (27b, 37b) correspondant et l'autre parmi la borne négative (19) et la borne positive (18) de chaque élément de batterie du deuxième groupe (21b, 31b) est électriquement connectée à la deuxième plaque collectrice de courant (23b', 33b') du second système collecteur de courant (25b, 35b) au niveau d'un deuxième site de connexion (27b', 37b') correspondant.

14. Module de batterie selon la revendication 13, dans lequel le premier groupe (1a, 11a, 21a, 31a) et le deuxième groupe (1b, 11b, 21b, 31b) d'éléments de batterie sont connectés en parallèle ou en série.

15. Véhicule incluant un module de batterie (4, 10, 20, 30) selon l'une des revendications 12 à 14.
